# EUROPEAN PATENT APPLICATION

(11) **EP 4 131 115 A1**
(43) Date of publication of application: **08.02.2023**
(21) Application number: 20927168.3
(22) Date of filing: 23.03.2020
(51) Int. Cl.: G06Q 30/02, G01C 21/26

(54) **ADVERTISEMENT DELIVERY SYSTEM, ADVERTISEMENT DELIVERY METHOD, AND PROGRAM**

(71) Applicant: Sharp NEC Display Solutions, Ltd., Tokyo 108-0073 (JP)
(72) Inventor: UCHIYAMA, Akira, Tokyo 108-0073 (JP)
(74) Representative: Müller Hoffmann & Partner
(86) International application number: PCT/JP2020/012729
(87) International publication number: WO 2021/191971

(57) **Abstract**

An advertisement delivery system (10) includes a calculation unit (110) and a display processing unit (120). The calculation unit (110) calculates an advertisement switching time on the basis of a time of departure from a facility or a time at which a destination within the facility should be reached in accordance with detection of a prescribed trigger event. The display processing unit (120) displays an advertisement in a prescribed display area. Also, the display processing unit (120) displays an advertisement associated with the facility in the prescribed display area when a current time is not past the switching time and displays an advertisement not associated with the facility in the prescribed display area when the current time is past the switching time.

## Description

### [Technical Field]

The present invention relates to an advertisement delivery system, an advertisement delivery method, and a program.

### [Background Art]

In recent years, the number of tourists has increased both domestically and internationally. Accordingly, the number of cases where information and advertisements on bulletin boards or paper media installed in public transportation facilities (stations, airports, and the like) are being replaced with electronic signage (digital signage) is increasing. As an example, electronic signage (digital signage) is installed near a display unit of an automatic check-in machine for use in boarding procedures or an automatic check-in machine as an external device.

Regarding the content of an advertisement to be displayed on digital signage as a medium, for example, a private company that is an owner of the digital signage and has the right to manage the airport introduces another facility such as a restaurant owned within the airport. In a current situation in which the development of information processing technology for displaying advertisements is promoted, some prior arts have been devised. For example, the devised prior arts are described in the following prior literature.

Patent Literature 1 discloses technology for dealing with a situation in which unscheduled free time occurs for a consumer due to the influence of a degree of congestion of boarding procedures at an airport or a change in the scheduled departure/arrival time of an airplane flight. For example, technology for displaying an advertisement for prompting airport users to use a restaurant located near a boarding gate associated with scheduled boarding in accordance with the delay time of the scheduled flight time and the degree of congestion has been disclosed.

### [Citation List]

### [Patent Literature]

[Patent Literature 1]
Japanese Unexamined Patent Application, First Publication No. 2012-128395

### [Summary of Invention]

### [Technical Problem]

For example, a period during which airport users can use internal facilities of the airport (restaurants and souvenir shops open for business inside the airport and the like) is limited on the basis of a departure time of the airplane that a user is scheduled to board. According to a period of time required for a boarding procedure and a departure time of an airplane that a user is scheduled to board, the airport user may not have much time left to use the internal facilities. In this case, even if advertisements for internal facilities of a departure airport (hereinafter also referred to as "own company-specific advertisements") are presented to the users, it is difficult to expect the effectiveness of advertisements so much. In this case, for example, a process of displaying advertisements (hereinafter also referred to as "other company-specific advertisements") for internal facilities of an arrival destination airport or other facilities (for example, a restaurant, an entertainment facility, and the like) located in an arrival destination region and charging advertisement fees to the facilities corresponding to the displayed advertisements is desirable in terms of the effectiveness of advertisements. However, when the other company-specific advertisements are displayed for airport users in a state in which a period of time in which the facilities within the airport are available is left, it may lead to a loss of opportunity to use at the facilities inside the departure airport. There is a need for technology for appropriately managing timings when own company-specific advertisements and other company-specific advertisements are displayed so that the cost-effectiveness of advertisements is maximized.

The present invention has been made in view of the above problems. One of the objectives of the present invention is to provide technology for increasing the cost-effectiveness of advertisements for owners who use digital signage as an advertising medium.

### [Solution to Problem]

According to the present invention, there is provided an advertisement delivery system including:
a calculation means configured to calculate an advertisement switching time on the basis of a time of departure from a facility or a time at which a destination within the facility should be reached in accordance with detection of a prescribed trigger event; and
a display processing means configured to display an advertisement in a prescribed display area,
wherein the display processing means displays an advertisement associated with the facility in the display area when a current time is not past the switching time, and
wherein the display processing means displays an advertisement not associated with the facility in the display area when the current time is past the switching time.

According to the present invention, there is provided an advertisement delivery method including:
calculating, by a computer, an advertisement switching time on the basis of a time of departure from a facility or a time at which a destination within the facility should be reached in accordance with detection of a prescribed trigger event;
displaying, by the computer, an advertisement associated with the facility in a prescribed display area when a current time is not past the switching time, and
displaying, by the computer, an advertisement not associated with the facility in the display area when the current time is past the switching time.

According to the present invention, there is provided a program for causing a computer to execute the above-described advertisement delivery method.

### [Advantageous Effects of Invention]

According to the present invention, it is possible to increase the cost-effectiveness of advertisements for owners who use digital signage as an advertising medium.

### [Brief Description of Drawings]

The above-described objectives and other objectives, features, and advantages will be further clarified by the preferred embodiments described below and the accompanying drawings below.

Fig. 1 is a diagram showing a functional configuration of an advertisement delivery system according to a first embodiment.
Fig. 2 is a diagram illustrating a hardware configuration of an information processing device that implements each function of an advertisement delivery system.
Fig. 3 is a diagram illustrating a specific system configuration of the advertisement delivery system according to the first embodiment.
Fig. 4 is a diagram showing an example of a network configuration of an advertisement delivery system 1.
Fig. 5 is a diagram illustrating a data flow between devices constituting the advertisement delivery system of the first embodiment.
Fig. 6 is a sequence diagram schematically illustrating a flow of a process executed by the advertisement delivery system of the first embodiment.
Fig. 7 is a flowchart illustrating a flow of a process executed by an information management server of the first embodiment.
Fig. 8 is a flowchart illustrating a flow of a process executed by the information management server of the first embodiment.
Fig. 9 is a diagram showing an example of an airport floor layout.
Fig. 10 is a diagram showing an example of an airplane flight service schedule.
Fig. 11 is a diagram illustrating a table that defines a corresponding relationship between a proportion of the number of passengers who have completed a procedure and an advertisement switching time.
Fig. 12 is a diagram illustrating the advertisement switching time determined on the basis of each reference value in the table of Fig. 11.
Fig. 13 is a diagram showing an example of information that defines a corresponding relationship between each procedure terminal and an address of a device of an advertisement delivery destination.
Fig. 14 is a flowchart illustrating a flow of a process executed by an advertisement delivery server.
Fig. 15 is a diagram showing an example of information stored in an advertisement information storage unit.
Fig. 16 is a diagram showing an example of a table storing detailed information of facilities within an airport.
Fig. 17 is a diagram illustrating a state transition of the advertisement delivery server.
Fig. 18 is a diagram illustrating a specific system configuration of an advertisement delivery system according to a second embodiment.
Fig. 19 is a diagram for describing a flow of a process executed by the advertisement delivery system at the time of check-in.
Fig. 20 is a diagram for describing a flow of a process executed by the advertisement delivery system when a passenger undergoes a security check procedure at a security checkpoint.
Fig. 21 is a flowchart illustrating a flow of a process executed by an image analysis device.
Fig. 22 is a flowchart illustrating a flow of a process executed by an information management server of the second embodiment.

### [Description of Embodiments]

Hereinafter, embodiments of the present invention will be described with reference to the drawings. In all the drawings, similar components are denoted by similar reference signs and the description thereof will be omitted as appropriate. Also, unless otherwise identified, in each block diagram, each block represents a component of a functional unit instead of a component of a hardware unit. Also, the direction of the arrow in the drawing is for making a flow of information easy to understand and does not limit a direction of communication (one-way communication/two-way communication), unless otherwise identified.

### [First embodiment]

### <Functional configuration>

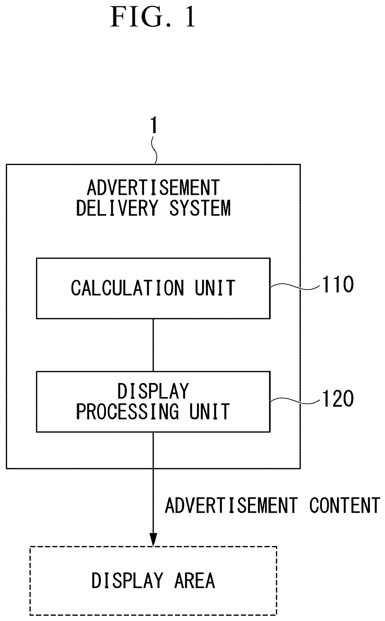

Fig. 1 is a diagram illustrating a functional configuration of an advertisement delivery system 1 according to the first embodiment. As shown in Fig. 1, the advertisement delivery system 1 of the present embodiment includes at least a calculation unit 110 and a display processing unit 120.

The calculation unit 110 calculates an advertisement switching time on the basis of a time of departure from a facility or a time at which a destination within the facility should be reached in accordance with detection of a prescribed trigger event. The "facility" mentioned herein includes, for example, facilities related to public transportation such as airports and train stations. Also, the "destination within the facility" is, for example, a boarding location for a vehicle of public transportation. For example, at an airport or the like, the "destination within the facility" is a "security checkpoint" or a "boarding gate where the airplane that a user is scheduled to board departs." Also, at passenger stations of railways and the like, the "destination within the facility" is a "platform at which a train that a user is scheduled to board arrives." Also, a "trigger event" is an event for acquiring information associated with a reference time when the advertisement switching time is calculated. Specific examples of the trigger event include an event in which a boarding ticket is read by a procedure terminal installed at a specific location at the airport (a check-in location, a baggage storage, a security checkpoint, or the like), an event in which a ticket is read by a ticket gate machine installed at a station, and the like. The "trigger event" in the present invention is not limited to the specific examples given here.

The display processing unit 120 switches an advertisement to be displayed in a prescribed display area on the basis of a current time and the switching time calculated by the calculation unit 110. Specifically, the display processing unit 120 displays an advertisement associated with the facility in the display area when the current time does not exceed the switching time (current time < switching time) and displays an advertisement not associated with the facility in the display area when the current time exceeds the switching time (current time > switching time). Here, the "advertisement associated with the facility" is an advertisement for the purpose of promoting the use of tenants (for example, restaurants, general stores, souvenir shops, entertainment facilities, and the like) within the facility. In the following description, the "advertisement associated with the facility" described above will also be referred to as an "own company-specific advertisement." Also, the "advertisement not associated with the facility" is an advertisement that is not intended to promote the use of the tenants as described above. For example, an advertisement for an internal facility of another public transportation facility (for example, a destination airport or station) different from the public transportation facility where the user is staying, an advertisement for a restaurant, an entertainment facility, or the like located in a region to which the user will travel using an airplane, a train, or the like, or the like corresponds to the "advertisement not associated with the facility" in the present description. In the following description, the "advertisement not associated with the facility" described above is also referred to as the "other company-specific advertisement."

### <Example of configuration of hardware>

Each functional component of the advertisement delivery system 1 may be implemented by hardware that implements each functional component (example: a hard-wired electronic circuit or the like) or may be implemented by a combination of hardware and software (example: a combination of an electronic circuit and a program that controls the electronic circuit or the like). Hereinafter, a case where each functional component of the advertisement delivery system 1 is implemented by a combination of hardware and software will be further described.

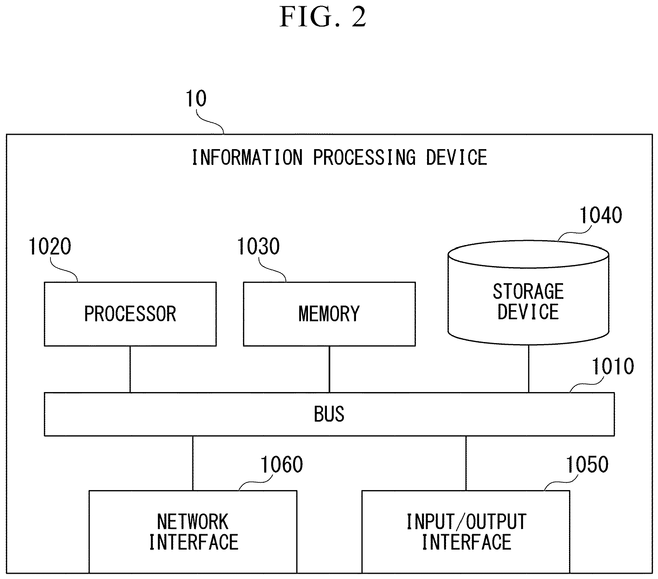

Fig. 2 is a diagram illustrating a configuration of hardware of an information processing device 10 that implements each function of the advertisement delivery system 1. In the example of Fig. 2, the information processing device 10 includes a bus 1010, a processor 1020, a memory 1030, a storage device 1040, an input/output interface 1050, and a network interface 1060.

The bus 1010 is a data transmission path for the processor 1020, the memory 1030, the storage device 1040, the input/output interface 1050, and the network interface 1060 to transmit and receive data to and from each other. However, a method of connecting the processor 1020 and the like to each other is not limited to a bus connection.

The processor 1020 is a processor implemented by a central processing unit (CPU), a graphics processing unit (GPU), or the like.

The memory 1030 is a main storage device implemented by a random-access memory (RAM) or the like.

The storage device 1040 is an auxiliary storage device implemented by a hard disk drive (HDD), a solid-state drive (SSD), a memory card, a read-only memory (ROM), or the like. The storage device 1040 stores program modules that implement functions (the calculation unit 110, the display processing unit 120, and the like) of the advertisement delivery system 1. When the processor 1020 reads the program modules into the memory 1030 and executes the program modules, the functions corresponding to the program modules are implemented.

The input/output interface 1050 is an interface for connecting the information processing device 10 and various types of input/output devices. For example, the information processing device 10 is connected to a display device for digital signage (not shown) via the input/output interface 1050. The display device for digital signage corresponds to a "prescribed display area" in the present invention. For example, at an airport, a display device for digital signage is incorporated in a procedure terminal (not shown) used at a location where a check-in procedure is performed or a procedure terminal (not shown) used at a security checkpoint. Also, as a device different from the above-described procedure terminal, the display device for digital signage may be provided near the procedure terminal. In this case, the information processing device 10 is connected to the display device for digital signage via the network interface 1060 to be described below.

The network interface 1060 is an interface for connecting the information processing device 10 to the network. This network is, for example, a local area network (LAN) or a wide area network (WAN). A method of connecting the network interface 1060 to the network may be a wireless connection or a wired connection. For example, the information processing device 10 may be connected to a projector (not shown) that projects an advertisement onto a screen for displaying the advertisement via the network interface 1060. In this case, the screen corresponds to the "prescribed display area" in the present invention. The screen is provided, for example, near the above-described procedure terminal.

A configuration of the hardware of the advertisement delivery system 1 is not limited to the configuration illustrated in Fig. 2. The advertisement delivery system 1 may be implemented by a plurality of information processing devices 10. For example, a part of the functional configuration of the advertisement delivery system 1 (example: the calculation unit 110) is provided in a first information processing device 10 and the remaining part of the functional configuration of the advertisement delivery system 1 (example: the display processing unit 120) may be provided in a second information processing device 10.

### <Example of system configuration of advertisement delivery system 1>

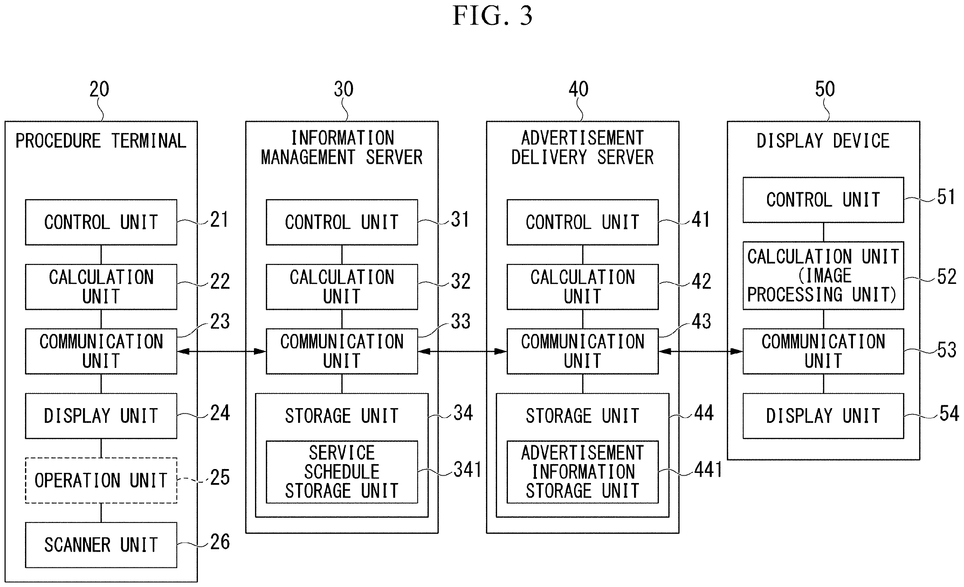

Hereinafter, a specific system configuration of the advertisement delivery system 1 will be described under the assumption of the case of use at an airport. Fig. 3 is a diagram illustrating the specific system configuration of the advertisement delivery system 1 according to the first embodiment. The advertisement delivery system 1 illustrated in Fig. 3 is configured to include a procedure terminal 20, an information management server 30, an advertisement delivery server 40, and a display device 50. Each device has, for example, a hardware configuration as illustrated in Fig. 2. In common for each device, an instruction for information processing or the like is analyzed in the calculation unit and a control signal based on an analysis result is transmitted from the control unit to the target processing unit via, for example, a serial bus. Also, each device includes a communication unit (a network interface) that performs wired or wireless communication and can transmit and receive data to and from other devices connected via the network.

The procedure terminal 20 is provided at various locations where various types of procedures are performed before passengers board an airplane such as a check-in location, a security checkpoint, and a baggage storage. As shown in Fig. 3, the procedure terminal 20 includes at least a display unit 24 and a scanner unit 26 in addition to a control unit 21, a calculation unit 22, and a communication unit 23. The display unit 24 displays screens for use in business related to various types of procedures. Also, the display unit 24 may be used as a display area for displaying an advertisement delivered from the advertisement delivery server 40. The scanner unit 26 reads a one- or two-dimensional code symbol printed on a boarding ticket retained by a passenger or a one- or two-dimensional code symbol displayed on a portable terminal retained by a passenger. Also, the procedure terminal 20 may further include an operation unit 25 that receives an input operation by an operator (a passenger, an airport staff member, or the like) according to the location where the procedure terminal 20 is provided. For example, the procedure terminal 20 provided at a location where check-in is performed may include the operation unit 25 such as a keyboard or a touch panel that receives an input operation at the time of check-in.

The procedure terminal 20 acquires information about passengers (hereinafter also referred to as "boarding information") via the operation unit 25 (a keyboard, a touch panel, or the like). The procedure terminal 20 can also acquire the boarding information via the scanner unit 26. The boarding information includes, for example, a reservation number that is issued when a reservation has been completed and the like. Content of the boarding information is not particularly limited as long as the content includes information for identifying information about a departure flight that the passenger boards (a scheduled departure time, an arrival destination, or the like). The procedure terminal 20 transmits the boarding information acquired via the operation unit 25 or the scanner unit 26 to the information management server 30 via the communication unit 23.

The information management server 30 implements some of the functions of the calculation unit 110 and the functions of the display processing unit 120 described above. As shown in Fig. 3, the information management server 30 includes a service schedule storage unit 341 in addition to a control unit 31, a calculation unit 32, and a communication unit 33. Also, a service schedule stored in the service schedule storage unit 341 is provided from, for example, an external device (a host computer or the like), and the service schedule is updated at any time according to a notification from the external device when the service schedule is changed.

The information management server 30 extracts a scheduled departure time of a departure flight corresponding to a reservation number of a boarding flight with reference to the service schedule storage unit 341 using the reservation number of the boarding flight included in the boarding information received from the procedure terminal 20 or the like as a search key. The information management server 30 determines the switching time on the basis of the extracted scheduled departure time. For example, when the procedure terminal 20 that has acquired the boarding information is a terminal provided at a check-in location or a baggage storage, the information management server 30 determines a prescribed deadline time of the security checkpoint (for example, "30 minutes before the scheduled departure time" or the like) as the switching time. Also, when the procedure terminal 20 that has acquired the boarding information is a terminal provided at the security checkpoint, the information management server 30 determines a prescribed deadline time of the boarding gate (for example, "10 minutes before the scheduled departure time" or the like) as the switching time. Also, the information management server 30 may determine a point in time before the deadline time (for example, 15 minutes before the deadline time or the like) as the switching time. For example, the information management server 30 acquires time information (the current time) managed by itself or a network time protocol (NTP) server (not shown). The information management server 30 compares the acquired current time with the calculated switching time and determines which of the own company-specific advertisement and the other company-specific advertisement is to be delivered. The information management server 30 transmits information for designating a type of advertisement content (own company-specific advertisements/other company-specific advertisements) to be delivered to the advertisement delivery server 40. Here, the information management server 30 may be configured to extract information about an arrival destination together with a scheduled departure time of a departure flight corresponding to a reservation number and further transmit the information about the arrival destination to the advertisement delivery server 40.

The advertisement delivery server 40 implements some of the functions of the display processing unit 120 described above. As shown in Fig. 3, the advertisement delivery server 40 includes an advertisement information storage unit 441 in addition to a control unit 41, a calculation unit 42, and a communication unit 43. The advertisement information storage unit 441 stores data related to advertisements to be delivered. Also, advertisement information stored in the advertisement information storage unit 441 is registered in advance, for example, via an external device (not shown).

The advertisement delivery server 40 refers to the advertisement information storage unit 441 using the information received from the information management server 30 as a search key and extracts advertisement information corresponding to the information. Here, when the information received from the information management server 30 includes information about the arrival destination of the departure flight, the advertisement delivery server 40 may select advertisement information associated with a region indicated in the information as advertisement information of an extraction target. The advertisement delivery server 40 delivers the extracted advertisement information to the procedure terminal 20 or the display device 50. When a portable information terminal (not shown) such as a smartphone has been used as the procedure terminal 20 for performing a boarding procedure, the advertisement delivery server 40 may deliver the extracted advertisement information to the portable information terminal.

The display device 50 decodes the advertisement information received from the advertisement delivery server 40 using the calculation unit 52 and displays the advertisement using the display unit 54 as a medium. The display device 50 is installed, for example, near the procedure terminal 20 for check-in, security check, or a baggage storage, at the entrance of the security checkpoint, inside of the security checkpoint, at the boarding gate (near the boarding gate), or the like. A procedure terminal for reading a passenger's boarding ticket or a procedure terminal for purchasing a boarding ticket is installed near an installation location of the display device 50 and the display device 50 is installed at a position that is within a visual field of a person using the procedure terminal.

### <Example of configuration of network of advertisement delivery system 1>

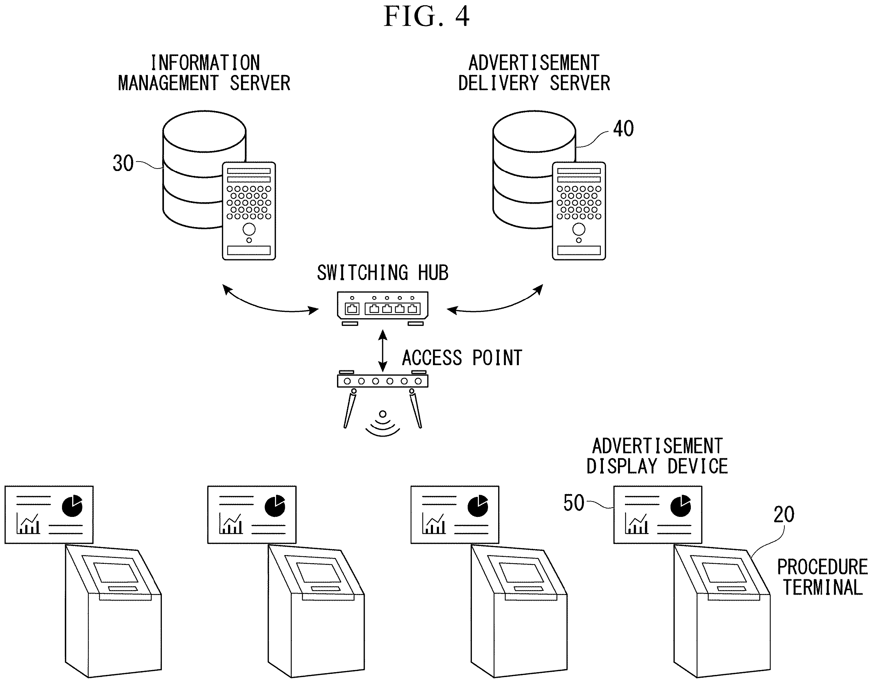

An example of a configuration of a network of the advertisement delivery system 1 will be described with reference to Fig. 4. Fig. 4 is a diagram showing the example of the configuration of the network of the advertisement delivery system 1. In the example of Fig. 4, one display device 50 is installed near each procedure terminal 20. In the example of Fig. 4, the procedure terminal 20 performs a relay operation for an access point and transmits boarding information to the information management server 30 using, for example, wireless LAN communication. The information management server 30 transmits information about an advertisement to be delivered to the advertisement delivery server 40 using wired or wireless LAN communication. In delivering the advertisement, the advertisement delivery server 40 delivers advertisement content to the specific procedure terminal 20 (the procedure terminal 20 that has acquired the boarding information) or the display device 50 for displaying the advertisement.

In the example of Fig. 4, a switching hub is installed between each server and the terminal and the switching hub relays communication in two LAN networks. The configuration of Fig. 4 is an example of a configuration in which centralized management by a server is assumed.

### <Data flow between devices>

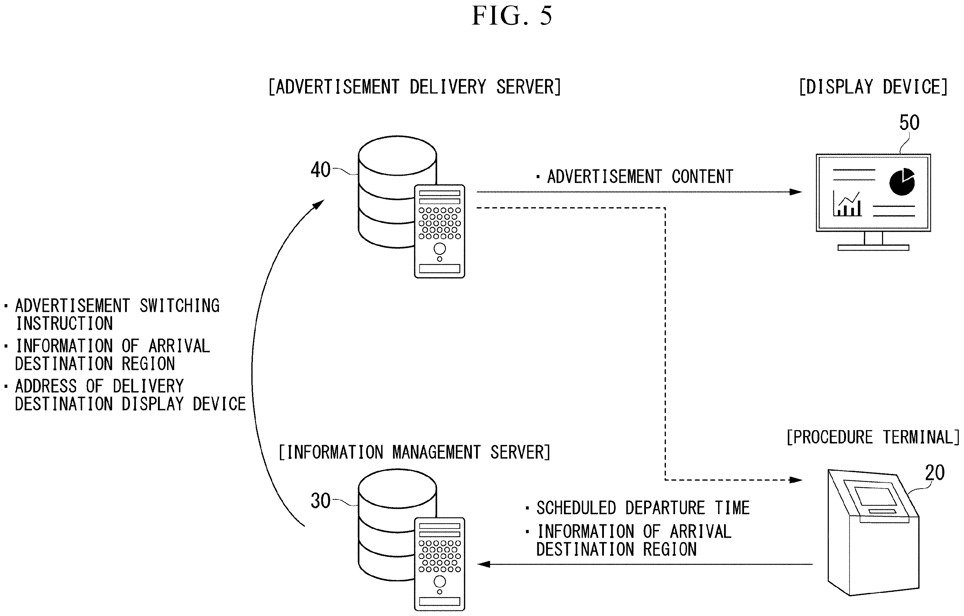

Fig. 5 is a diagram illustrating a data flow between devices constituting the advertisement delivery system 1 of the first embodiment. The procedure terminal 20 transmits at least information indicating a scheduled departure time to the information management server 30. As shown in Fig. 5, the procedure terminal 20 may be configured to transmit information about an arrival destination region to the information management server 30 in addition to the information indicating the scheduled departure time. The information management server 30 transmits an advertisement switching instruction and information indicating an address of a display device (or a procedure terminal) to which an advertisement is delivered to the advertisement delivery server 40. Also, the information management server 30 may be configured to transmit the information about the arrival destination region to the advertisement delivery server 40 in addition to the two pieces of information described above when the information management server 30 has acquired the information about the arrival destination region from the procedure terminal 20. The advertisement delivery server 40 identifies the advertisement content to be delivered on the basis of the information received from the information management server 30. The advertisement delivery server 40 transmits the identified advertisement content to the destination (the display device 50 or the procedure terminal 20) indicated in the information received from the information management server 30. Although not shown, when the boarding procedure has been performed using a portable information terminal such as a smartphone, the advertisement delivery server 40 transmits the identified advertisement content to the portable information terminal.

### <Processing flow>

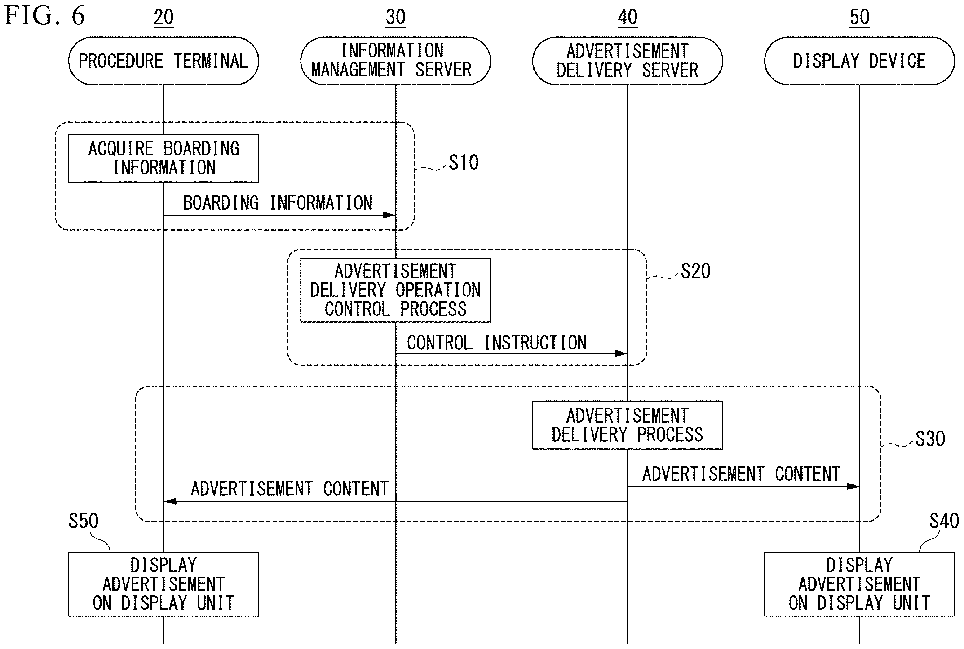

Fig. 6 is a sequence diagram schematically illustrating a flow of a process executed by the advertisement delivery system 1 of the first embodiment.

First, the procedure terminal 20 acquires boarding information via the operation unit 25 or the scanner unit 26 and transmits the acquired boarding information to the information management server 30 (S10). The information management server 30 executes a process of controlling an advertisement delivery operation by the advertisement delivery server 40 in accordance with detection of a trigger event of "boarding information acquisition" (S20). Details of the process executed by the information management server 30 will be described below. When a control instruction for switching a type of advertisement content from an own company-specific advertisement to another company-specific advertisement has not been received from the information management server 30, the advertisement delivery server 40 extracts the own company-specific advertisement from the advertisement information storage unit 441 and deliver the extracted own company-specific advertisement. When the above-described control instruction is received from the information management server 30, the advertisement delivery server 40 extracts the other company-specific advertisement as the advertisement content from the advertisement information storage unit 441 and delivers the extracted advertisement content to the display device 50 or the procedure terminal 20 (S30). Details of the process executed by the advertisement delivery server 40 will be described below. When the display device 50 or the procedure terminal 20 receives the advertisement content from the advertisement delivery server 40, the display device 50 or the procedure terminal 20 displays the advertisement content on the display unit (S40 and S50). Although not shown, when the boarding procedure has been performed using a portable information terminal such as a smartphone, the advertisement delivery server 40 transmits the identified advertisement content to the portable information terminal in the processing of S30. The portable information terminal displays the advertisement content transmitted from the advertisement delivery server 40 on its own display unit via, for example, a Web browser or a dedicated application.

### <<Process of information management server 30>>

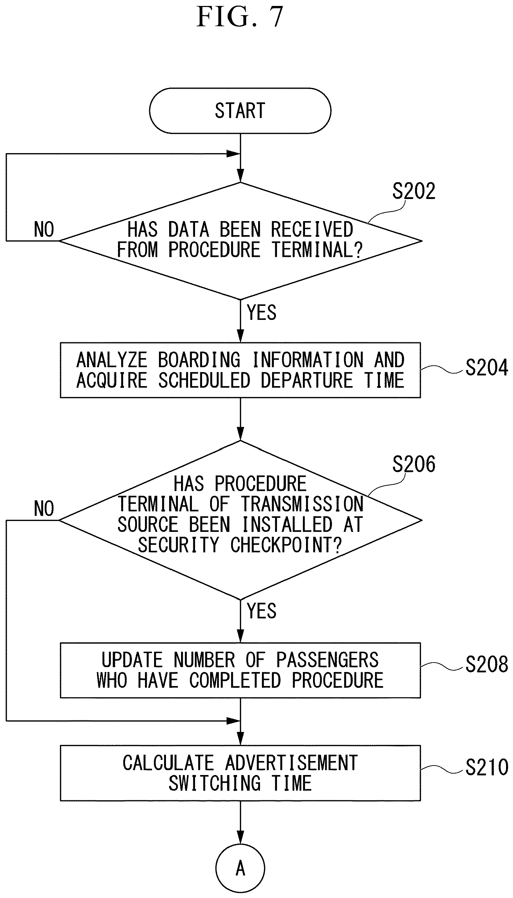

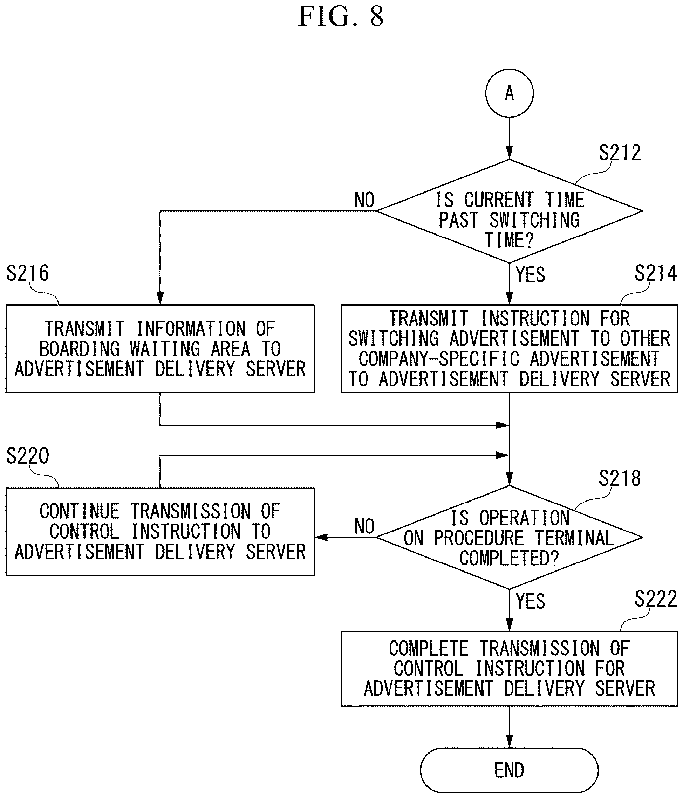

Details of the process of the information management server 30 will be described with reference to Figs. 7 and 8. Figs. 7 and 8 are flowcharts illustrating a flow of a process executed by the information management server 30 of the first embodiment.

The information management server 30 is on standby until data including boarding information is received from the procedure terminal 20. When the data including the boarding information is received from the procedure terminal 20 (S202: YES), the information management server 30 analyzes the boarding information and acquires at least a scheduled departure time of a departure flight that the passenger will board (S204).

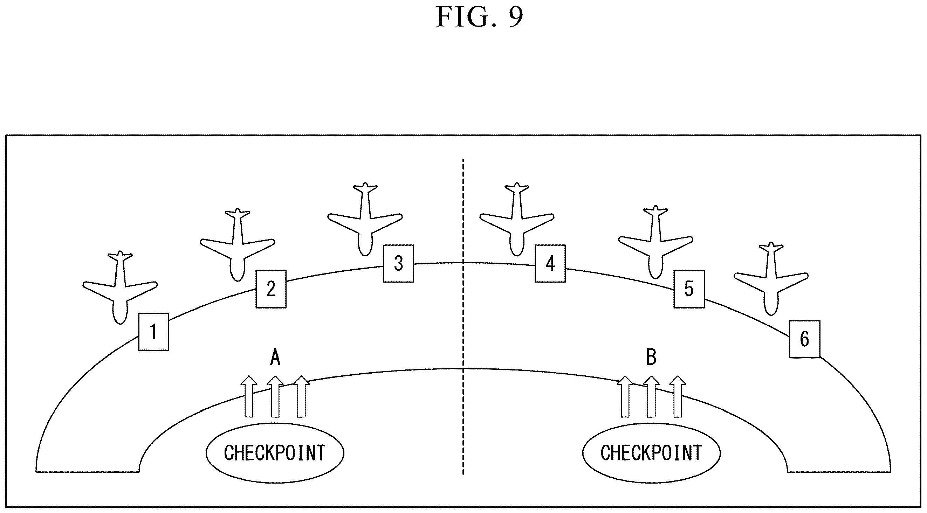

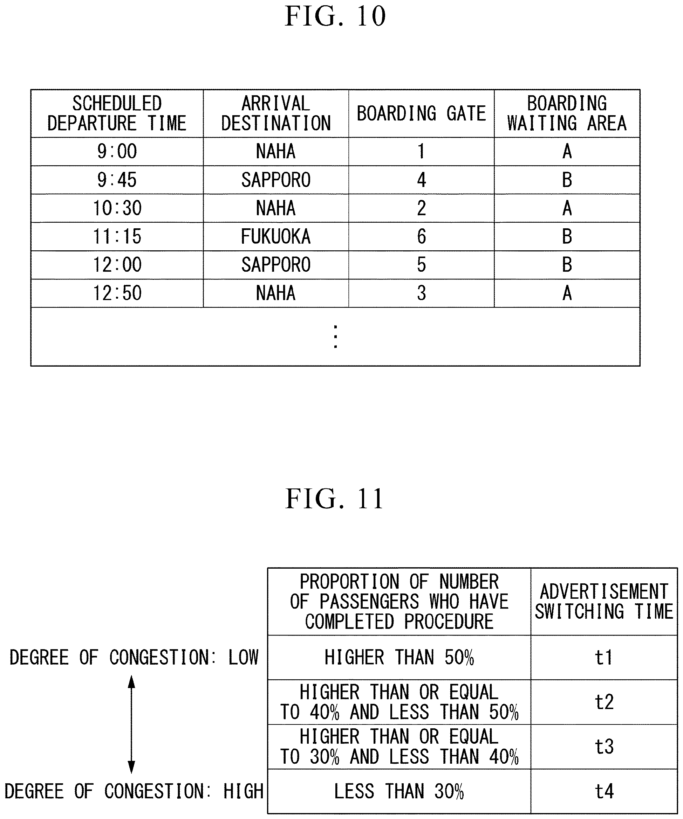

Here, a period of time required for various types of procedures (a check-in procedure, a baggage storage procedure, and a security check procedure) required to board an airplane may vary with a degree of congestion at a location where each procedure is performed. As the degree of congestion of the location where each procedure is performed increases, a waiting time period for the procedure increases and a total required period of time increases as a result. Consequently, it can be said that adjusting the advertisement switching time in consideration of the degree of congestion is effective in terms of the cost-effectiveness of advertisements. The degree of congestion at each procedure location can be estimated to some extent according to a proportion of passengers who have completed various types of procedures at a timing when a certain boarding ticket is read. For example, if many passengers have completed various types of procedures necessary for boarding an airplane for the departure flight corresponding to the read boarding ticket, it can be predicted that each procedure location will not be so crowded thereafter. Also, there is a possibility that passengers for a plurality of departure flights will coexist at the security checkpoint. For example, at an airport with a floor layout as shown in Fig. 9, it is assumed that a service schedule as shown in Fig. 10 is set. Fig. 10 is a diagram showing an example of an airplane flight service schedule. In this case, a case where, in consideration of a distance to the boarding gate, people who board flights departing from boarding gates 1 to 3 mainly use the security checkpoint located on a boarding waiting area A side and people who board flights departing from boarding gates 4 to 6 mainly use the security checkpoint located on a boarding waiting area B side is considered. Also, a case where, because boarding gates for a flight to Fukuoka scheduled to depart at 11: 15 and a flight to Sapporo scheduled to depart at 12:00 are set on the same boarding waiting area B side, there is a possibility that people who will board these flights will move to the security checkpoint on the boarding waiting area B side in the same time period is considered. In this case, the degree of congestion at each procedure location can be estimated with higher accuracy by calculating the ratio of the number of people who have completed various types of procedures to the total number of passengers scheduled to board each departure flight.

From the above description, the information management server 30 may be configured to calculate an advertisement switching time on the basis of a ratio of the number of people who have completed various types of procedures with respect to one or more airplanes to the number of people who are scheduled to board the one or more flights identified on the basis of a departure time.

Also, the nearest security checkpoint is uniquely determined for each boarding gate from the floor layout of the airport. That is, it is possible to define a corresponding relationship between each security checkpoint and one or more boarding gates from the floor layout of the airport. For example, in an airport with a floor layout as shown in Fig. 9, boarding gates 1 to 3 and boarding gates 4 to 6 are associated with the security checkpoint on the boarding waiting area A side and the security checkpoint on the boarding waiting area B side. The information management server 30 may set an advertisement switching time on the basis of such a corresponding relationship. For example, when the procedure terminal 20 that has acquired boarding information is a terminal located at the security checkpoint on the boarding waiting area A side, the information management server 30 may acquire scheduled departure times of airplanes that will depart from the boarding gates 1 to 3 and calculate the advertisement switching time using the earliest time among the scheduled departure times. Thereby, a process of calculating the advertisement switching time is simplified and the effect of shortening a period of time required for the process can be expected.

In the illustrated flowchart, the information management server 30 manages the number of people who have completed various types of procedures (from a check-in procedure to a security check procedure) required for the people to board the airplane according to whether or not the procedure terminal 20 of a transmission source of data acquired in the processing of S202 is a terminal installed at the security checkpoint. When the procedure terminal 20 of the data transmission source is not a terminal installed in the security checkpoint (S206: NO), the information management server 30 does not execute the processing of S208 to be described below. On the other hand, when the procedure terminal 20 of the data transmission source is a terminal installed in the security checkpoint (S206: YES), the information management server 30 determines that people holding boarding tickets read by the procedure terminal 20 have completed all procedures and updates the number of passengers who have completed the procedure for the departure flight corresponding to the boarding tickets (S208). Also, for example, the information management server 30 can identify an installation location of the procedure terminal 20 of the data transmission source with reference to a table (not shown) in which identification information of each terminal (a media access control (MAC) address, an Internet protocol (IP) address, or the like of each terminal) is associated with an installation location of each terminal or the like. Also, the number of passengers who have completed the procedure for each departure flight is stored in, for example, the storage unit 34 of the information management server 30. Also, the number of people scheduled to board each departure flight can be obtained from a server (not shown) that manages reservation information or the like.

The information management server 30 calculates the advertisement switching time (S210). The information management server 30 can calculate the advertisement switching time on the basis of a proportion of the number of passengers who have completed the procedure described above, for example, as shown below.

First, the information management server 30 calculates a proportion of the number of passengers who have completed the procedure. As an example, it is assumed that the boarding ticket for the flight to Fukuoka scheduled to depart at 11: 15 has been read by the procedure terminal 20 in the service schedule illustrated in Fig. 5. Here, in the service schedule illustrated in Fig. 5, the flight to Fukuoka scheduled to depart at 11: 15 and the flight to Sapporo scheduled to depart at 12:00 have a time difference within one hour between the scheduled departure times thereof and have the same boarding waiting area where the boarding gate is located. Thus, passengers for each flight are expected to use the security checkpoint near the boarding waiting area B in a similar time period. In this case, the information management server 30 calculates a total value of the number of passengers scheduled to board the two departure flights and a total value of the number of passengers who have completed the procedure for the two departure flights and calculates a proportion of the number of passengers who have completed the procedure on the basis of these total values.

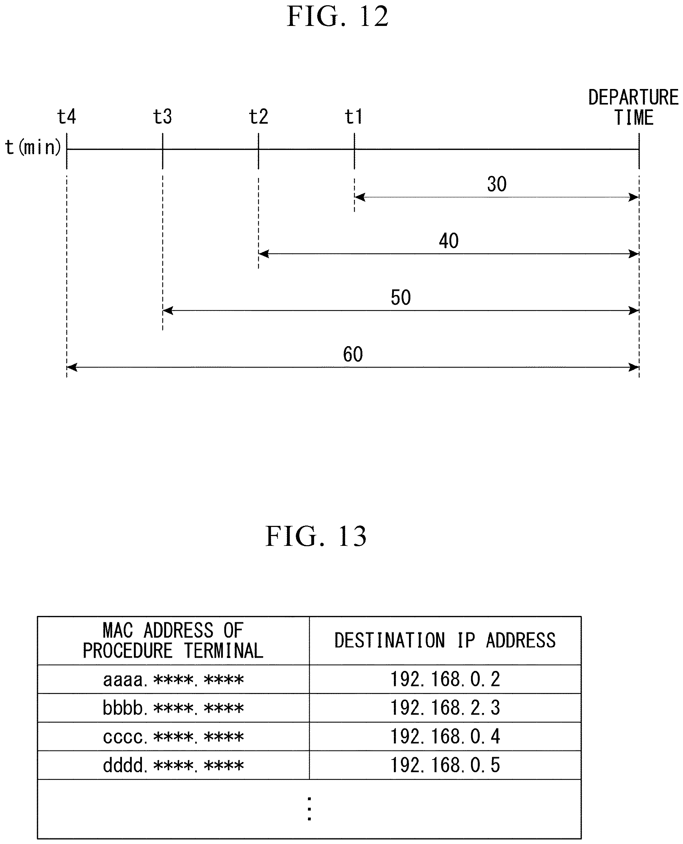

The information management server 30 determines the advertisement switching time corresponding to the proportion of the number of passengers who have completed the procedure, for example, with reference to a table as shown in Fig. 11. Fig. 11 is a diagram illustrating a table that defines a corresponding relationship between the proportion of the number of passengers who have completed the procedure and the advertisement switching time. Also, t1 to t4 in Fig. 11 can be arbitrarily set. Here, as shown in Fig. 12, a period of time required for various types of procedures (a check-in procedure, a baggage storage procedure, a security check procedure, and the like) required to board an airplane when the degree of congestion is low is estimated to be about 30 minutes, t1 is set to a time that is "30 minutes before the scheduled departure time," t2 is set to a time that is "40 minutes before the scheduled departure time," t3 is set to a time that is "50 minutes before the scheduled departure time," and t4 is set to a time that is "60 minutes before the scheduled departure time." As shown in Fig. 12, when the proportion of the number of passengers who have completed the procedure is higher (i.e., the degree of congestion is lower), the advertisement switching time (a timing of switching from the own company-specific advertisement to the other company-specific advertisement) is later. Also, for example, in a case where the check-in procedure is performed in advance using the Internet or the like, a period from t1 to t4 may be set to a shorter period of time. Specifically, if the check-in procedure has been completed before arrival at the airport, a period of time required for various types of procedures performed at the airport will be shortened. In other words, because the airport users have more time to act freely, it is possible to shift the advertisement switching timing to a later timing.

When a table as illustrated in Fig. 11 is used, for example, if the proportion of the number of passengers who have completed the procedure is 50%, the information management server 30 selects t1 (30 minutes before the scheduled departure time) as the advertisement switching time. The information management server 30 calculates the time that is 30 minutes before the scheduled departure time acquired in the processing of S204 as the advertisement switching time. Here, the information management server 30 may be configured to calculate the switching time by further using the information of the location where the necessary procedures are performed until the passenger boards the airplane. For example, the information management server 30 corrects the switching time calculated using the above-described table of Fig. 11 or the like on the basis of a distance between the security checkpoint used by the passenger and the boarding gate of the flight used by the passenger. Specifically, the information management server 30 advances the switching time as the distance between the security checkpoint and the boarding gate increases. In this way, it is possible to estimate a time at which the advertisement should be switched with higher accuracy in consideration of a period of time required to move toward the boarding gate.

The information management server 30 determines whether or not the current time has exceeded the advertisement switching time calculated in the processing of S210 (S212). For example, the information management server 30 may acquire a point in time when data has been received from the procedure terminal 20 as the current time. Also, the information management server 30 may acquire time information (the current time) by communicating with the NTP server at a timing when the determination of S212 is made.

When the current time is past the advertisement switching time (S212: YES), the information management server 30 issues a switching instruction for switching the advertisement displayed in the display area from the own company-specific advertisement related to a facility in the airport to the other company-specific advertisement to the advertisement delivery server 40 (S214). The advertisement delivery server 40 continues to deliver the other company-specific advertisement while the switching instruction for the other company-specific advertisement is transmitted from the information management server 30. Also, the advertisement switching instruction includes a destination address of the display device 50 or the procedure terminal 20 serving as the advertisement delivery destination. Also, when the information management server 30 can acquire information of an arrival destination region in the processing of S204, the information of the arrival destination region may be included in the advertisement switching instruction.

The information management server 30 can acquire information indicating a destination address of a device to which the advertisement is delivered, for example, with reference to the table as shown in Fig. 13. Fig. 13 is a diagram showing an example of information that defines a corresponding relationship between each procedure terminal and an address of the device of the advertisement delivery destination. In the table illustrated in Fig. 13, a MAC address of each procedure terminal 20 and a destination IP address of a device of an advertisement delivery destination are stored in association. In a destination IP address column, an IP address assigned to the procedure terminal 20 or an IP address assigned to the display device 50 provided near the procedure terminal 20 corresponding to the MAC address within the same record are stored. The information management server 30 can convert the MAC address into an IP address of the device of the advertisement delivery destination with reference to a table as shown in Fig. 13 using a transmission source MAC address of data received in the processing of S202 as a search key. As another example, under a situation where it is possible to already ascertain the IP address of each display device 50 (example: a situation where the IP address of each display device 50 has been registered in the storage device 1040 or the like), if the information management server 30 acquires the MAC address according to an address resolution protocol (ARP), the address conversion table as shown in Fig. 13 is not always necessary.

On the other hand, if the current time is not past the advertisement switching time (S212: NO), the advertisement switching instruction is not transmitted to the advertisement delivery server 40. In this case, the advertisement delivery server 40 continues to deliver the own company-specific advertisement to the procedure terminal 20 or the display device 50. When the advertisement switching instruction is not transmitted, the information management server 30 may transmit information of the boarding waiting area corresponding to the boarding gate of the departure flight to the advertisement delivery server 40 (S216). In this case, the advertisement delivery server 40 can narrow down own company-specific advertisements to be delivered on the basis of information of the boarding waiting area.

While the control instruction is transmitted to the advertisement delivery server 40, the information management server 30 waits for a notification indicating that the operation on the procedure terminal 20 has been completed (S218). When the notification indicating that the operation on the procedure terminal 20 has been completed has not been received from the procedure terminal 20 (S220: NO), the information management server 30 continues the transmission of the control instruction to the advertisement delivery server 40 (S220). On the other hand, when the notification indicating that the operation on the procedure terminal 20 has been completed has been received from the procedure terminal 20 (S220: YES), the information management server 30 completes the transmission of the control instruction to the advertisement delivery server 40 (S222).

### (Specific example of process of information management server 30)

As described above, when a result of comparing the current time and the advertisement switching time indicates that the current time is past the advertisement switching time, the information management server 30 changes the advertisement to be displayed in the display area from the own company-specific advertisement to the other company-specific advertisement. Hereinafter, some specific examples of the above-described process will be given.

As an example, a case where the current time is 8:00 and a proportion of the number of passengers who have completed the procedure is 40% with respect to the flight to Naha scheduled to depart at 9:00 is considered. In this case, the information management server 30 selects t2 (40 minutes before the departure time) as the advertisement switching time with reference to the table as shown in Fig. 11. That is, the advertisement switching time is set to a time that is 40 minutes before 9:00, i.e., 8:20. Here, the current time (8:00) is not past the advertisement switching time (8:20). Thus, the information management server 30 does not execute the advertisement switching (switching from the own company-specific advertisement to the other company-specific advertisement).

As another example, a case where the current time is 8:00 and the proportion of the number of passengers who have completed the procedure is 20% with respect to the flight to Naha at the scheduled departure time of 9:00 is considered. In this case, the information management server 30 selects t24 (60 minutes before the departure time) as the advertisement switching time with reference to the table as shown in Fig. 11. That is, the advertisement switching time is set to a time that is 60 minutes before 9:00, i.e., 8:00. Here, the current time (8:00) is past the advertisement switching time (8:00). Thus, the information management server 30 executes the advertisement switching (switching from the own company-specific advertisement to the other company-specific advertisement).

### <<Process of advertisement delivery server 40>>

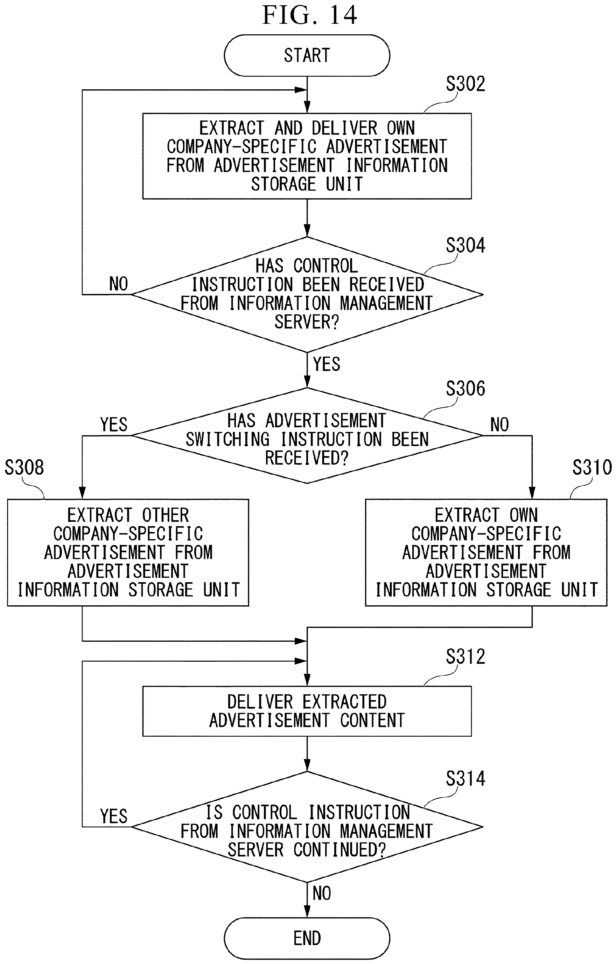

Details of the process of the information management server 30 will be described with reference to Fig. 14. Fig. 14 is a flowchart illustrating a flow of a process executed by the advertisement delivery server 40.

First, the advertisement delivery server 40 continues the delivery of the own company-specific advertisement (the advertisement within the facility at the airport) unless a control instruction is received from the information management server 30 (S302 and S304: NO).

When the boarding information of the passenger has been acquired by performing a process of reading a boarding ticket with the procedure terminal 20 or the like, the information management server 30 determines whether or not to switch an advertisement to be displayed in the target display area from the own company-specific advertisement to the other company-specific advertisement and transmits a control instruction to the advertisement delivery server 40 on the basis of a determination result as described with reference to Figs. 8 and 9. In this way, when the control instruction has been received from the information management server 30 (S304: YES), the advertisement delivery server 40 further determines whether or not the control instruction is an advertisement switching instruction (S306).

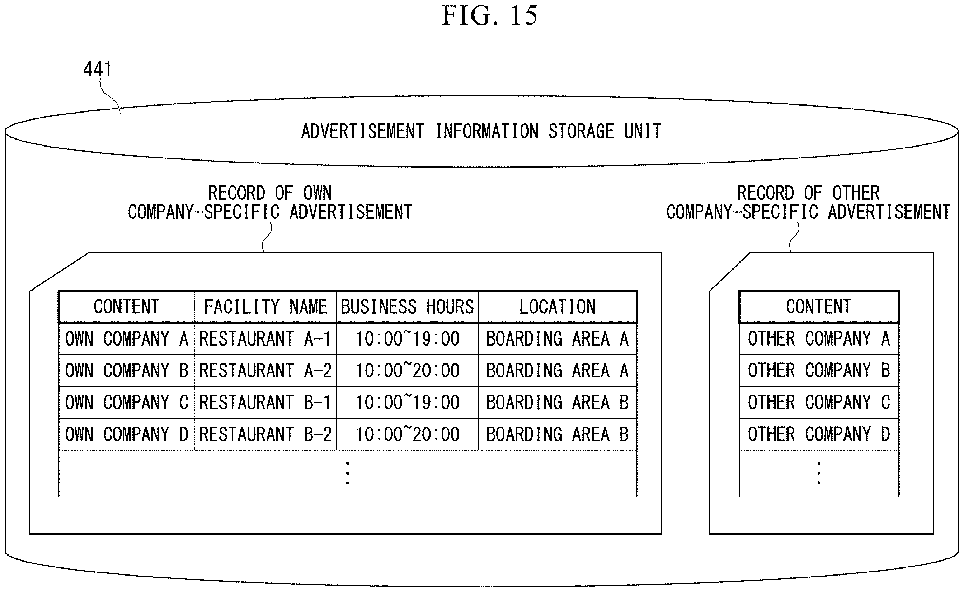

When the control instruction received from the information management server 30 is the advertisement switching instruction (S306: YES), the advertisement delivery server 40 extracts another company-specific advertisement from the advertisement information storage unit 441 (S308). The advertisement information storage unit 441 stores advertisement information, for example, as shown in Fig. 15. Fig. 15 is a diagram showing an example of information stored in the advertisement information storage unit 441. In the example of Fig. 15, the advertisement information storage unit 441 stores a record of advertisement content corresponding to the own company-specific advertisement and a record of advertisement content corresponding to the other company-specific advertisement. The record of the own company-specific advertisement includes at least actual data of the content, information for uniquely identifying a facility such as a facility name, and information about the facility such as business hours and a location of the facility. Also, the record of the other company-specific advertisement includes at least actual data of the content.

Here, when the advertisement switching instruction includes the information of the arrival destination region, the advertisement delivery server 40 can narrow down the advertisement content of an extraction target on the basis of the information of the arrival destination region. For example, when the advertisement information storage unit 441 separately manages the other company-specific advertisement for each region, the advertisement delivery server 40 can extract the other company-specific advertisement of a corresponding region on the basis of information of the arrival destination region included in the advertisement switching instruction.

On the other hand, when the control instruction received from the information management server 30 is not an advertisement switching instruction (S306: NO), the advertisement delivery server 40 extracts the own company-specific advertisement from the advertisement information storage unit 441 (S310). In this case, the advertisement delivery server 40 extracts the advertisement content whose advertisement type is an "own company-specific advertisement" from the advertisement content stored in the advertisement information storage unit 441.

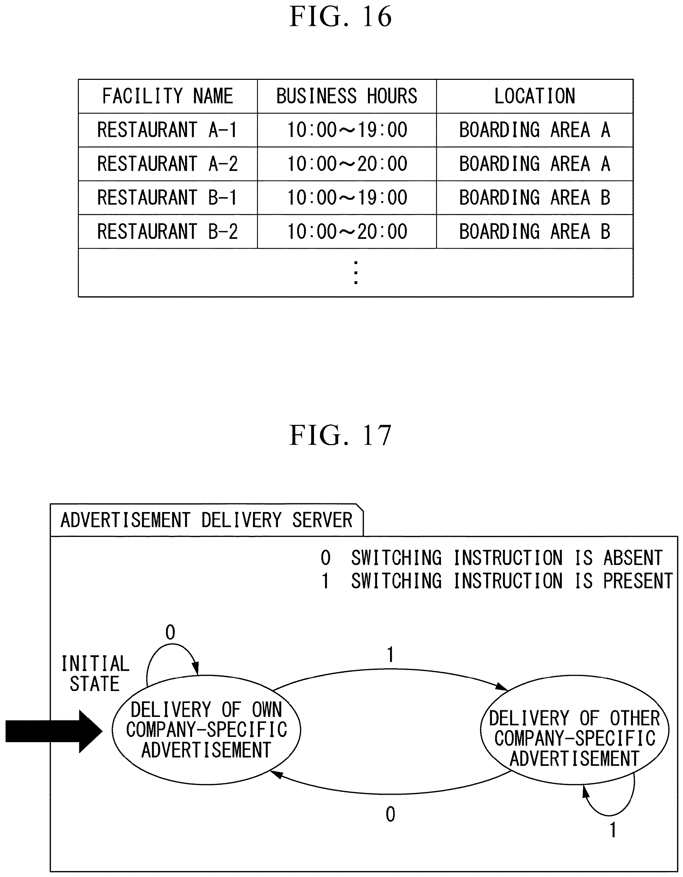

Here, when the information of the boarding waiting area acquired in the processing of S216 of Fig. 8 has been received, the advertisement delivery server 40 can narrow down the advertisement content of the extraction target using the information of the boarding waiting area. For example, the advertisement delivery server 40 may identify the facility within the airport located in the boarding waiting area whose information has been received on the basis of the table as shown in Fig. 16 and extract the advertisement corresponding to the facility as the content of the delivery target. Also, the advertisement delivery server 40 may compare the current time with the business time of each facility and extract the advertisement corresponding to the facility that is currently open for business as the content of the delivery target. In this case, the advertisement delivery server 40 may extract the content of the delivery target on the basis of either the boarding waiting area or the business hours or may extract the content of the delivery target on the basis of a combination thereof. Also, the advertisement delivery server 40 may be configured to select advertisement content of an extraction target on the basis of a priority level set for each facility when there are a plurality of facilities that are open for business. The priority level of each facility can be set on the basis of an attribute such as a distance from an advertisement display region to a facility or the age or gender of a target group of the facility. Also, the advertisement delivery server 40 may be configured to select advertisements to be displayed so that the number of display operations of each advertisement is equal. For example, the advertisement delivery server 40 may equalize the number of display operations on each advertisement by performing a process of setting up fragmentation on the displayed advertisement or the like (in this case, fragmentation is reset when fragmentation is set for all advertisements). Also, for example, the advertisement delivery server 40 may record the number of display operations on each advertisement in its own memory or the like and preferentially select and display an advertisement having a small number of display operations. In addition, the advertisement delivery server 40 may acquire the degree of congestion of the facility corresponding to the advertisement and preferentially select and display the advertisement of the facility having a low degree of congestion. Also, when there is no facility that is open for business, the advertisement delivery server 40 may extract other company-specific advertisements that are not dependent on a region (for example, content such as product introductions and promotional videos of convenience stores or apparel brands that are widely deployed nationwide) as advertisements of a delivery target.

Also, when advertisement content (own company-specific advertisements) for facilities within the airport is delivered, the advertisement content to be displayed is likely to change with the position of the user. For example, if the user has already completed the security check, the user cannot return to a region outside of the boarding waiting area where he/she will stay after the security check. Thus, it can be said that advertisement content of the facility within the airport located in an area outside of the boarding waiting area is not suitable as advertisement content to be displayed on the display device 50 installed at the security checkpoint. Therefore, the advertisement delivery server 40 may be configured to narrow down content to be extracted from the advertisement information storage unit 441 on the basis of an area where the display device 50 serving as a delivery destination of the advertisement content is installed when the advertisement delivery server 40 delivers the advertisement content corresponding to the own company-specific advertisements. For example, it is determined that the "procedure terminal 20 is installed at the security checkpoint" in the determination process of S206 in Fig. 7. In this case, the information management server 30 notifies the advertisement delivery server 40 of a determination result as information about an installation area of the procedure terminal 20. The advertisement delivery server 40 that has received the notification extracts the advertisement content by narrowing down content to the advertisement content of the facility located in the boarding waiting area (an area where people stay after the security check is performed) in the processing of S308. Specifically, the advertisement delivery server 40 can narrow down the advertisement content serving as the extraction target within the advertisement content of the facility within the airport on the basis of information indicating an area where the facility is located (example: a location in Fig. 16). Thereby, it is possible to prevent the effectiveness of advertisement content from being reduced.

The advertisement delivery server 40 delivers the advertisement content extracted in the processing of S308 or S310 while the control instruction from the information management server 30 continues (S312 and S314: YES). Also, when the control instruction from the information management server 30 has been completed (S314: NO), the advertisement delivery server 40 completes the delivery of the advertisement content extracted in S308 and S310. Subsequently, the advertisement delivery server 40 executes a process of delivering the own company-specific advertisements (the processing of S302) until the next control instruction is received from the information management server 30.

As illustrated in the above-described flowchart, the advertisement delivery server 40 switches the advertisement to be displayed in the display area between the own company-specific advertisement and the other company-specific advertisement in accordance with the control instruction transmitted from the information management server 30. For example, the diagram of a state transition of the advertisement delivery server 40 is as shown in Fig. 17. Fig. 17 is a diagram illustrating the state transition of the advertisement delivery server 40. In an initial state, the advertisement delivery server 40 (the display processing unit 120) displays the own company-specific advertisement (an advertisement for facilities within the airport) in the display area. Here, when the switching instruction is received from the information management server 30 (1), the advertisement delivery server 40 (the display processing unit 120) displays another company-specific advertisement (an advertisement not associated with the facilities within the airport) in the display area. When there is no return instruction from the information management server 30 (0), the advertisement delivery server 40 (the display processing unit 120) returns the advertisement to be displayed in the display area to the own company-specific advertisement.

### <Other configurations>

Although not shown, the advertisement delivery system 1 may further include a fee calculation unit configured to calculate an advertisement fee (an advertisement fee charged to an advertiser of the other company-specific advertisement) according to the display of the other company-specific advertisement. Also, an advertisement display time period and a viewing time period of the passenger are not always equal. Thus, the charge calculation unit is not particularly limited, but it is preferable to calculate the advertisement fee in accordance with the number of times the advertisement is displayed. In this case, for example, the calculation unit 42 of the advertisement delivery server 40 totals the number of display operations of each advertisement, and the total number of display operations of each advertisement is stored in, for example, the storage unit 44 of the advertisement delivery server 40. Also, the advertisement delivery server 40 may be configured to save information for calculating an advertisement fee in accordance with a result of the above-described process of delivering the advertisement content (an advertisement content delivery result such as the number of advertisement content display operations and a display time period) in the storage unit 44 for each advertiser. Thereby, the advertisement fee management process is facilitated. For example, a fee calculation unit can easily calculate the advertisement fee for each advertiser using information stored for each advertiser.

### [Second embodiment]

The configuration described in the first embodiment is effective in a situation in which a period of time sufficient to view the advertisement is given to a passenger. However, for example, at an airport security checkpoint or the like, it is assumed that, even if an advertisement is displayed during and after the check, there is not enough time to view the advertisement. Thus, there is a possibility that the effectiveness of advertisements will be reduced. For example, boarding information of a passenger can generally be read at a security checkpoint immediately before the check. In this case, the passenger does not have much time to view the advertisement. The advertisement delivery system 1 of the present embodiment further includes a configuration for such a problem. The advertisement delivery system 1 of the present embodiment has a configuration similar to that of the first embodiment, except for differences to be described below.

### <Example of system configuration of advertisement delivery system 1>

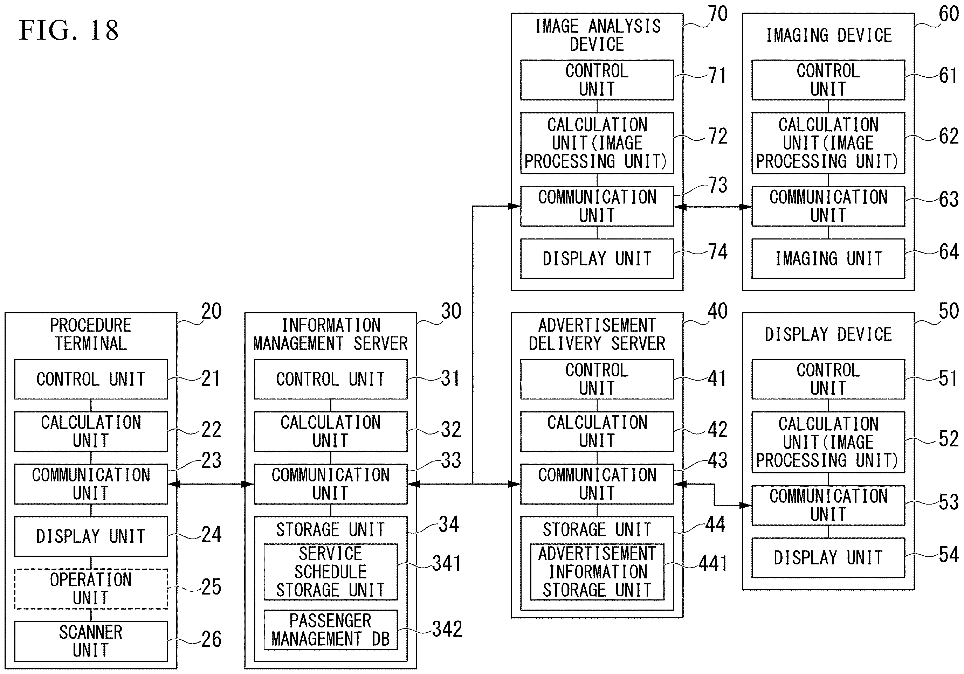

Fig. 18 is a diagram illustrating a specific system configuration of the advertisement delivery system 1 according to the second embodiment. The advertisement delivery system 1 illustrated in Fig. 18 is configured to include an imaging device 60 and an image analysis device 70 in addition to the configuration described in Fig. 3. Also, in Fig. 18, the information management server 30 further includes a passenger management DB 342 configured to store a face image of the passenger and the boarding information in association. Each device has, for example, a hardware configuration as illustrated in Fig. 2. In common for each device, an instruction for information processing or the like is analyzed in the calculation unit and a control signal based on an analysis result is transmitted from the control unit to a target processing unit via, for example, a serial bus. Also, each device includes a communication unit (a network interface) configured to perform wired or wireless communication and can transmit and receive data to and from other devices connected via the network.

The imaging device 60 images faces of passengers waiting at the security checkpoint using the imaging unit 64. The imaging device 60 processes an image captured by the imaging unit 64 in the calculation unit (the image processing unit) 62 and transmits the image to the image analysis device 70 via the communication unit 63. An operation of the imaging device 60 is controlled by, for example, the image analysis device 70.

The image analysis device 70 collates the face image of the passenger received from the imaging device 60 with the face image registered in the passenger management DB 342 and notifies the information management server 30 of information of a matching person.

### <Processing flow>

Hereinafter, a flow of a process executed by the advertisement delivery system 1 of the present embodiment will be described with reference to the drawings.

### <<Process at time of check-in>>

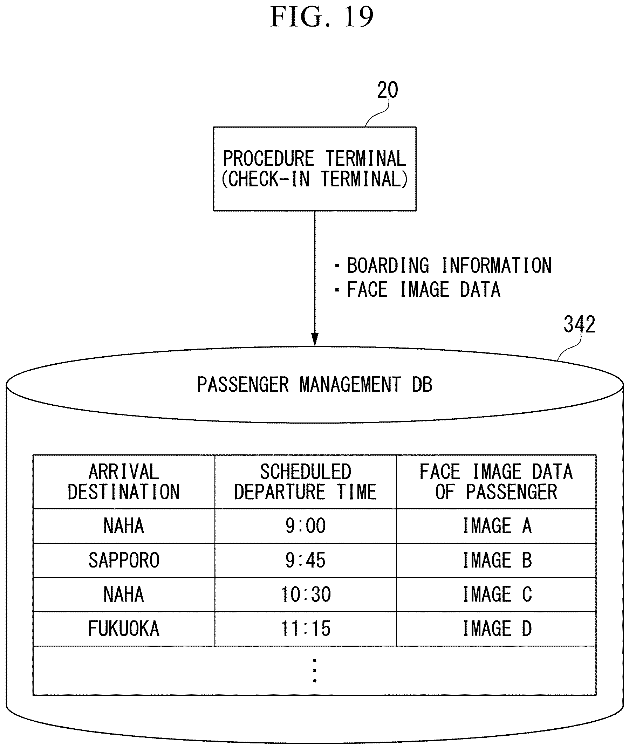

Fig. 19 is a diagram for describing a flow of a process executed by the advertisement delivery system 1 at the time of check-in. In the present embodiment, the procedure terminal 20 provided at a check-in location acquires the face image of the passenger at the time of the check-in procedure of the passenger. The procedure terminal 20 can acquire a face image of the passenger, for example, by scanning a face photograph of a passport of the passenger. Also, the procedure terminal 20 may acquire a face image of the passenger using, for example, another imaging device (not shown) provided near the procedure terminal 20. The procedure terminal 20 for check-in transmits data of the face image of the passenger acquired as described above and boarding information of the passenger to the information management server 30. The information management server 30 associates the boarding information received from the procedure terminal 20 for check-in with the data of the face image and registers the boarding information associated with the data of the face image in the passenger management DB 342. Also, a process of extracting the advertisement to be displayed at the time of the check-in procedure and a process of delivering the advertisement are carried out as in the first embodiment.

### <<Process at security checkpoint>>

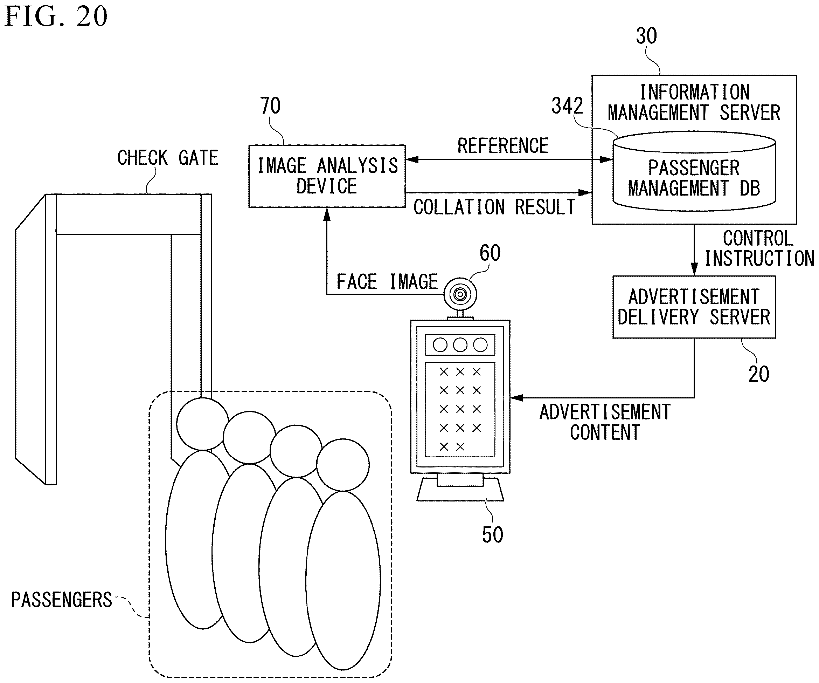

Subsequently, the passenger performs a security check procedure at the security checkpoint as shown in Fig. 20. Fig. 20 is a diagram for describing a flow of a process executed by the advertisement delivery system 1 when the passenger undergoes a security check procedure at a security checkpoint.

Here, as shown in Fig. 20, a queue of passengers waiting for a check procedure in front of a check gate installed at the security checkpoint is formed. The passengers waiting for the check procedure can view the advertisement displayed on the display device 50 installed near the queue with a sufficient time period, for example, as shown in Fig. 20.

Here, the face of the passenger waiting for the check procedure is imaged by the imaging device 60 installed near the display device 50 (for example, the upper part of the display device 50). Although an example in which the imaging device 60 is provided on the upper part of the display device 50 is shown in Fig. 20, an installation position of the imaging device 60 is not limited to the example of Fig. 20. For example, the imaging device 60 may be installed, for example, on the wall or ceiling of an airport so that a prescribed area where a queue at the security checkpoint can be formed is included in an imaging range. The image analysis device 70 collates the face image of the passenger generated by the imaging device 60 with the face image data registered in advance with reference to the passenger management DB 342. The image analysis device 70 transmits a collation result to the information management server 30. The information management server 30 reads boarding information (a scheduled departure time, an arrival destination region, and the like) from the passenger management DB 342 on the basis of the collation result. The information management server 30 calculates the advertisement switching time using the boarding information and transmits a control instruction to the advertisement delivery server 40 on the basis of the switching time, as in the first embodiment. The advertisement delivery server 40 switches advertisement content to be delivered to the display device 50 in accordance with a control instruction from the information management server 30.

### <<Process of image analysis device 70>>

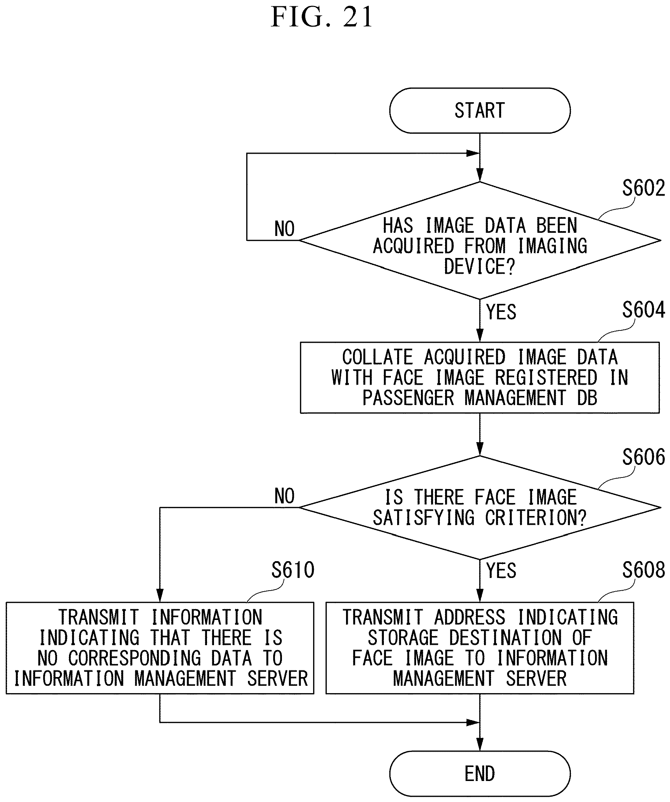

Fig. 21 is a flowchart illustrating a flow of a process executed by the image analysis device 70.

When image data is acquired from the imaging device 60 (S602: YES), the image analysis device 70 collates the acquired image data (a face image of a passenger waiting at the security checkpoint) with a face image registered in the passenger management DB 342 (a face image registered at the time of check-in) (S604). A method of comparing two facial images is not particularly limited. For example, the image analysis device 70 calculates a matching rate of feature points such as eyes, a nose, a mouth, and a contour for each face image stored in the passenger management DB 342 and identifies a face image whose matching rate satisfies a criterion.

Also, as illustrated in Fig. 20, because faces of a plurality of passengers can be included in one image, the image analysis device 70 may execute a process of cutting out an image area (a face image of each passenger) corresponding to a face of each passenger from image data acquired from the imaging device 60. The image analysis device 70 selects a face image to be collated in S604 from the cut-out face image of each passenger. For example, because it is preferable to take a sufficient time period to view the advertisement, the image analysis device 70 may identify a passenger near the end of the queue from a positional relationship in the image and select the face image of the passenger as a target. Also, the image analysis device 70 may select a face image of a person located in a prescribed area (for example, an area in front of the display device 50) or closest to the area as a face image of a collation target.

When there is a face image satisfying the criterion as a result of the collation process of S604 (S606: YES), the image analysis device 70 transmits an address indicating a storage destination of the face image to the information management server 30 (S608). On the other hand, when there is no face image satisfying the criterion as a result of the collation process of S604 (S606: NO), the image analysis device 70 transmits information indicating that there is no corresponding data to the information management server 30.

Also, in the collation process of S604, the image analysis device 70 may select all face images cut out from images acquired in the processing of S602 as a target. As a result of the collation processing of S604, when there are a plurality of face images satisfying a prescribed criterion, the image analysis device 70 transmits information indicating a storage destination address for each of the plurality of face images to the information management server 30 in the processing of S608.

### <<Process of information management server 30>>

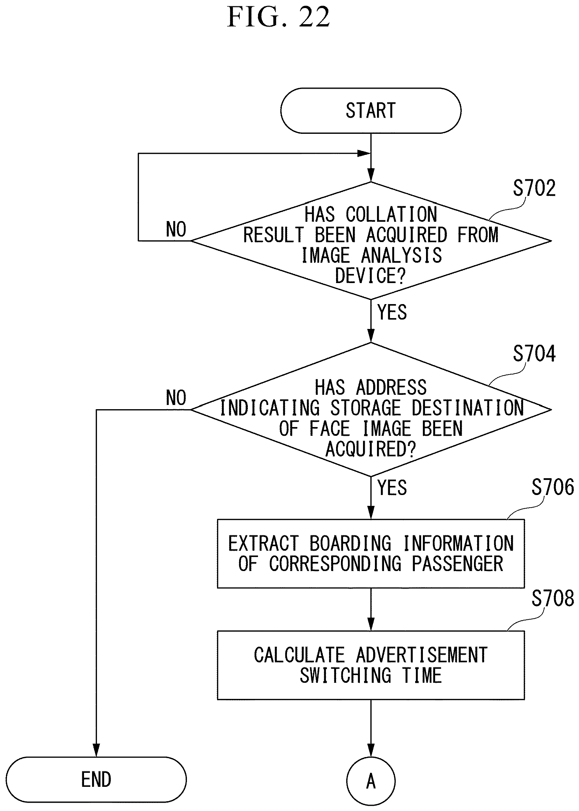

Fig. 22 is a flowchart illustrating a flow of a process executed by the information management server 30 of the second embodiment. Hereinafter, differences from the operation described in the first embodiment will be mainly described.

First, the information management server 30 waits until the result of the collation process is received from the image analysis device 70 (S702). When the information management server 30 acquires the result of the collation process from the image analysis device 70 (S702: YES), the information management server 30 further determines whether or not content of the acquired collation process result is an "address indicating a storage destination of the face image" (S704).

When the result of the collation process is "information indicating that there is no corresponding data," i.e., is not the "address indicating the storage destination of the face image" (S704: NO), the information management server 30 ends the process and waits until a new collation result is received from the image analysis device 70.

On the other hand, when the result of the collation process is the "address indicating the storage destination of the face image" (S704: YES), the information management server 30 searches the passenger management DB 342 on the basis of the address and extracts the boarding information of the passenger collated by the image analysis device 70 (S706). The information management server 30 calculates an advertisement switching time, for example, as in the process of the first embodiment, using a scheduled departure time of the boarding information extracted in the processing of S706 (S708). The flow of the process executed after the advertisement switching time is calculated is similar to the flow described in the first embodiment (example: the flowchart of Fig. 9).

Also, when addresses of a plurality of face images have been acquired from the image analysis device 70 in the processing of S702, the information management server 30 may be configured to select advertisement content to be delivered (another company-specific advertisement) on the basis of a result of aggregating information of arrival destinations corresponding to the face images stored in the acquired addresses. For example, it is assumed that the information management server 30 has acquired an address indicating a storage destination of images A to D in a state in which the information as illustrated in Fig. 19 is stored in the passenger management DB 342. In this case, the information management server 30 can control the advertisement delivery server 40 so that the display device 50 displays the other company-specific advertisement associated with Naha on the basis of a result of aggregating the arrival destinations. Thereby, when the other company-specific advertisement is displayed, the advertisement expected to have higher effectiveness can be displayed on the display device 50.

### <Modified examples>

When a radio frequency (RF) tag or the like is embedded in a boarding ticket, the information management server 30 may perform a process using information obtained from the RF tag of each boarding ticket instead of the above-described face image. In this case, for example, an RF tag reading device (not shown) is provided near an area where people line up to wait for their turn at the check-in location, the baggage storage, or the security checkpoint. The reading device reads information such as a reservation number from the RF tag of the boarding ticket held by each of the passengers who line up to wait for their turn. Also, the reading device is connected to the information management server 30 via a network. The information management server 30 acquires a scheduled departure time corresponding to reservation information from a database (not shown) that manages a reservation state of each flight that the passenger boards using the information such as the reservation number read by the reading device. The information management server 30 calculates a switching time of advertisement content, for example, as in the process of the first embodiment, on the basis of the acquired scheduled departure time, a deadline time of a boarding gate determined from the scheduled departure time, or the like.

As described above, according to the present embodiment, it is possible to secure a sufficient viewing time period when presenting an advertisement to a target person. Thereby, the effectiveness (profit) of the advertisement can be maximized.

### [Other application examples of advertisement delivery system 1]

The advertisement delivery system 1 according to the present invention can also be applied to facilities other than airports. For example, the advertisement delivery system 1 can be operated at a railway station. An operation of the advertisement delivery system 1 in this case will be schematically described below.

The display area for displaying the advertisement is, for example, a ticket window of a station, an automatic ticket vending machine, or a display device provided near a ticket gate. In this case, it is determined whether or not an advertisement to be displayed on the corresponding display device should be switched at a timing when a user has purchased a ticket or a timing when the user has inserted a ticket into the ticket gate. For example, the calculation unit 110 acquires a scheduled departure time of a vehicle that the user can board with the ticket at the timing when the user has purchased the ticket at a ticket window of a station or an automatic ticket vending machine or the timing when the user has inserted the ticket into the ticket gate. The calculation unit 110 calculates the advertisement switching time based on the scheduled departure time, for example, on the basis of a distance to a boarding location (a platform at which the train that the user is scheduled to board will arrive). Also, the display processing unit 120 compares the calculated advertisement switching time with the current time (a time at which the ticket has been purchased or a time at which the ticket has been inserted) and determines whether or not it is necessary to switch between the own company-specific advertisement and the other company-specific advertisement. For example, when the current time is past the advertisement switching time, it is determined whether or not to display advertisements (own company-specific advertisements) for promoting restaurants and souvenir shops that are open for business between the station premises or the ticket gate and the platform or to display advertisements (other company-specific advertisements) for promoting other stores or products not associated with stores that are open for business in the station.

Also, for example, the advertisement delivery system 1 can be operated in a theme park or the like. The operation of the advertisement delivery system 1 in this case will be schematically described below.

In this case, a display area for displaying advertisements is, for example, a display unit of the portable terminal owned by the user of the theme park. Also, a "destination" and a "time at which the user needs to arrive at the destination" are an "entrance/exit gate" and a "closing time" or the like, respectively. As an example, when an application for providing various types of information within a theme park is activated on a portable terminal, the calculation unit 110 calculates an advertisement switching time based on the closing time on the basis of, for example, a distance between a position of the portable terminal and a position of the entrance/exit gate. Also, the display processing unit 120 compares the calculated advertisement switching time with the current time (for example, a time at which the application has been activated) and determines whether or not it is necessary to switch the advertisement between the own company-specific advertisement and the other company-specific advertisement. For example, if the current time is past the advertisement switching time, the determination is made to display advertisements (own company-specific advertisements) for promoting restaurants and goods departments that are open for business within the theme park or to display advertisements (other company-specific advertisements) for promoting other stores and goods not associated with the theme park.

Although the embodiments of the present invention have been described above with reference to the drawings, the present invention should not be construed as being limited thereto and various changes and improvements and the like can be made on the basis of the knowledge of those skilled in the art without departing from the scope and spirit of the present invention. Appropriate combinations of the components disclosed in the embodiments can form various inventions. For example, one or more components among all the components shown in the embodiments can be omitted. Furthermore, the components can be appropriately combined over the different embodiments.

Although a plurality of processing steps (processes) have been described in order in the flowcharts and the sequence diagrams used in the above description, the order in which the processing steps are executed in each embodiment is not limited to the order described in the embodiments. In each embodiment, the order of the processing steps shown in the drawing can be changed in a range without causing a problem in content. Also, the above-described embodiments can be combined in a range in which content does not conflict.

Although some or all of the above-described embodiments can be described as in the following appendixes, the present invention is not limited to the following appendixes.
1. An advertisement delivery system including:
   a calculation means configured to calculate an advertisement switching time on the basis of a time of departure from a facility or a time at which a destination within the facility should be reached in accordance with detection of a prescribed trigger event; and
   a display processing means configured to display an advertisement in a prescribed display area,
   wherein the display processing means displays an advertisement associated with the facility in the display area when a current time is not past the switching time, and
   wherein the display processing means displays an advertisement not associated with the facility in the display area when the current time is past the switching time.
2. The advertisement delivery system according to appendix 1,
   wherein the facility is a facility related to public transportation, and
   wherein the destination is a boarding location.
3. The advertisement delivery system according to appendix 2, wherein the facility is an airport.
4. The advertisement delivery system according to appendix 3, wherein the display area is provided at a check-in location, a security checkpoint, or a baggage storage.
5. The advertisement delivery system according to appendix 3 or 4,
   wherein the calculation means acquires a scheduled departure time of a flight used by a user using ticket information of a ticket held by the user of the airport or a face image of the user, and
   wherein the calculation means calculates the switching time on the basis of the scheduled departure time.
6. The advertisement delivery system according to any one of appendixes 3 to 5, wherein the calculation means calculates the switching time on the basis of a ratio of the number of people who have completed all procedures required to board one or more airplanes to the number of people scheduled to board the one or more airplanes identified on the basis of a scheduled departure time.
7. The advertisement delivery system according to appendix 6, wherein the calculation means advances the switching time as the ratio increases.
8. The advertisement delivery system according to appendix 6 or 7, wherein the calculation means calculates the switching time by further using information of a location where a procedure has been performed.
9. The advertisement delivery system according to appendix 3 or 4,
   wherein a security checkpoint and one or more boarding gates are associated in advance, and
   wherein the calculation means calculates the switching time using an earliest time among boarding times of the boarding gates associated with the security checkpoint.
10. The advertisement delivery system according to appendix 9, wherein, when there are a plurality of security checkpoints, one or more boarding gates are associated with each security checkpoint.
11. The advertisement delivery system according to any one of appendixes 1 to 10, wherein the time is a scheduled time of departure from the facility.
12. An advertisement delivery method including:
   calculating, by a computer, an advertisement switching time on the basis of a time of departure from a facility or a time at which a destination within the facility should be reached in accordance with detection of a prescribed trigger event;
   displaying, by the computer, an advertisement associated with the facility in a prescribed display area when a current time is not past the switching time, and
   displaying, by the computer, an advertisement not associated with the facility in the display area when the current time is past the switching time.
13. The advertisement delivery method according to appendix 12,
   wherein the facility is a facility related to public transportation, and
   wherein the destination is a boarding location.
14. The advertisement delivery method according to appendix 13, wherein the facility is an airport.
15. The advertisement delivery method according to appendix 14, wherein the display area is provided at a check-in location, a security checkpoint, or a baggage storage.
16. The advertisement delivery method according to appendix 14 or 15, including:
   acquiring, by the computer, a scheduled departure time of a flight used by a user using ticket information of a ticket held by the user of the airport or a face image of the user, and
   calculating, by the computer, the switching time on the basis of the scheduled departure time.
17. The advertisement delivery method according to any one of appendixes 14 to 16, including calculating, by the computer, the switching time on the basis of a ratio of the number of people who have completed all procedures required to board one or more airplanes to the number of people scheduled to board the one or more airplanes identified on the basis of a scheduled departure time.
18. The advertisement delivery method according to appendix 17, including advancing, by the computer, the switching time as the ratio increases.
19. The advertisement delivery method according to appendix 17 or 18, including calculating, by the computer, the switching time by further using information of a location where a procedure has been performed.
20. The advertisement delivery method according to appendix 14 or 15,
   wherein a security checkpoint and one or more boarding gates are associated in advance, and
   wherein the advertisement delivery method includes calculating, by the computer, the switching time using an earliest time among boarding times of the boarding gates associated with the security checkpoint.
21. The advertisement delivery method according to appendix 20, wherein, when there are a plurality of security checkpoints, one or more boarding gates are associated with each security checkpoint.
22. The advertisement delivery method according to any one of appendixes 12 to 21, wherein the time is a scheduled time of departure from the facility.
23. A program for causing a computer to execute the advertisement display method according to any one of appendixes 12 to 22.

## Claims

1. An advertisement delivery system comprising:
a calculation means configured to calculate an advertisement switching time on the basis of a time of departure from a facility or a time at which a destination within the facility should be reached in accordance with detection of a prescribed trigger event; and
a display processing means configured to display an advertisement in a prescribed display area,
wherein the display processing means displays an advertisement associated with the facility in the display area when a current time is not past the switching time, and
wherein the display processing means displays an advertisement not associated with the facility in the display area when the current time is past the switching time.

2. The advertisement delivery system according to claim 1,
wherein the facility is a facility related to public transportation, and
wherein the destination is a boarding location.

3. The advertisement delivery system according to claim 2, wherein the facility is an airport.

4. The advertisement delivery system according to claim 3, wherein the display area is provided at a check-in location, a security checkpoint, or a baggage storage.

5. The advertisement delivery system according to claim 3 or 4,
wherein the calculation means acquires a scheduled departure time of a flight used by a user using ticket information of a ticket held by the user of the airport or a face image of the user, and
wherein the calculation means calculates the switching time on the basis of the scheduled departure time.

6. The advertisement delivery system according to any one of claims 3 to 5, wherein the calculation means calculates the switching time on the basis of a ratio of the number of people who have completed all procedures required to board one or more airplanes to the number of people scheduled to board the one or more airplanes identified on the basis of a scheduled departure time.

7. The advertisement delivery system according to claim 6, wherein the calculation means advances the switching time as the ratio increases.

8. The advertisement delivery system according to claim 6 or 7, wherein the calculation means calculates the switching time by further using information of a location where a procedure has been performed.

9. The advertisement delivery system according to claim 3 or 4,
wherein a security checkpoint and one or more boarding gates are associated in advance, and
wherein the calculation means calculates the switching time using an earliest time among boarding times of the boarding gates associated with the security checkpoint.

10. The advertisement delivery system according to claim 9, wherein, when there are a plurality of security checkpoints, one or more boarding gates are associated with each security checkpoint.

11. The advertisement delivery system according to any one of claims 1 to 10, wherein the time is a scheduled time of departure from the facility.

12. An advertisement delivery method comprising:
calculating, by a computer, an advertisement switching time on the basis of a time of departure from a facility or a time at which a destination within the facility should be reached in accordance with detection of a prescribed trigger event;
displaying, by the computer, an advertisement associated with the facility in a prescribed display area when a current time is not past the switching time, and
displaying, by the computer, an advertisement not associated with the facility in the display area when the current time is past the switching time.

13. A program for causing a computer to execute the advertisement display method according to claim 12.
